# EUROPÄISCHE PATENTSCHRIFT

(11) **EP 3 805 683 B1**
(45) Veröffentlichungstag und Bekanntmachung des Hinweises auf die Patenterteilung: **16.04.2025**
(21) Anmeldenummer: 20000344.0
(22) Anmeldetag: 25.09.2020
(51) Int. Cl.: F27B 3/08, F27B 3/28, F27B 14/06, F27B 14/20, F27D 11/06, F27D 21/00, F27D 21/04, F27D 99/00

(54) **VERFAHREN ZUR ÜBERPRÜFUNG DES FUNKTIONSZUSTANDES EINES INDUKTIONSTIEGELOFENS UND INDUKTIONSTIEGELOFEN**
METHOD FOR CHECKING THE FUNCTIONAL STATE OF AN INDUCTION CRUCIBLE FURNACE AND INDUCTION CRUCIBLE FURNACE
PROCÉDÉ DE VÉRIFICATION DE L'ÉTAT FONCTIONNEL D'UN FOUR À CREUSET À INDUCTION ET FOUR À CREUSET À INDUCTION

(30) Priorität: 07.10.2019 DE 102019006960
(43) Veröffentlichungstag der Anmeldung: 14.04.2021
(73) Patentinhaber: ABP Induction Systems GmbH, 44147 Dortmund (DE)
(72) Erfinder: FRIEBE, Konrad, 47058 Duisburg (DE); SCHREITER, Till, 45479 Mülheim an der Ruhr (DE)
(74) Vertreter: Hauck Patentanwaltspartnerschaft mbB

(56) Entgegenhaltungen:
- EP-A1- 0 639 936
- EP-A2- 1 818 638
- WO-A1-2012/159208
- DE-A1- 102010 029 289
- DE-U1- 202016 005 599

## Beschreibung

Die vorliegende Erfindung betrifft ein Verfahren zur Überprüfung des Funktionszustandes eines Induktionstiegelofens.

Ein Induktionstiegelofen weist eine Ofenkonstruktion mit einem Ofentiegel und einer diesen umgebenden Induktionsspule auf. Solche Induktionstiegelöfen sind bekannt. Durch Beaufschlagung der Induktionsspule mit elektrischem Strom wird entsprechende Wärmeenergie erzeugt, durch die die im Ofentiegel befindlichen Metallteile aufgeschmolzen werden.

Dabei ist die Tiegelofenspule im Betriebszustand dynamischen elektromagnetischen Kräften ausgesetzt, welche die Spulenwindungen periodisch in axialer Richtung zusammenziehen und in radialer Richtung ausdehnen. Zudem entstehen durch die Wärmedehnung des Tiegels radiale, nach außen gerichtete Kräfte.

Zwischen den Windungen der Spule sind isolierende Zwischenlagen verbaut, um einen Kurzschluss von einer Windung zur nächsten (sogenannten Windungsschluss) zu verhindern. Die besagten dynamischen Kräfte wirken sich auch auf die besagten Zwischenlagen aus und schädigen diese abhängig von der Einsatzdauer. Diese Schädigung kann zu einer Abnahme der Materialstärke der Zwischenlage führen, wodurch sich für die Spulenwindung an dieser Stelle ein Bewegungsfreiraum ergibt. Diese Bewegungsfreiheit der Spulenwindung führt zu einem fortschreitenden Prozess der Schädigung der Zwischenlage.

Dem kann entgegengewirkt werden, indem die Spule im Zuge regelmäßiger Wartungsarbeiten in axialer und radialer Richtung verspannt bzw. die Verspannung kontrolliert wird. Dennoch ist nach einer gewissen Zeit keine ausreichende Stärke der Zwischenlage mehr gegeben, weswegen die Spule ersetzt oder repariert werden muss. Hierdurch können unerwartete Produktionsausfälle eintreten. Ferner besteht die Gefahr, dass die regelmäßige Kontrolle der Spulenverspannung unterbleibt, wodurch ebenfalls ein Frühausfall der Spule entstehen kann.

WO 2012/159208 A1 betrifft einen metallurgischen Ofen, bei dem Risse oder andere plastische Verformungen des aus feuerfestem Material bestehenden und einem kontinuierlichen Verschleiß unterworfenen Ofentiegels mittels Triangulation dreier Sensoren ermittelt werden, die akustische Emissionen detektieren. Für die akustische Emission ist eine Vielzahl von Schallemissionssensoren vorgesehen, die an dem Ofenmantel angebracht sind, um mit elektrischen Signalen im Ofen erzeugte Schallemissionen anzuzeigen. Aus den erfassten Signalen wird aus jeweils drei Messwerten die Ursprungsposition der Schallemissionen bestimmt. Hierzu sind die Sensoren in zwei parallel zueinander verlaufenden, jeweils versetzten Streifen angeordnet.

EP 0 639 936 A1 einen Induktionsofen, mit der Zielsetzung, die Induktionsspule derart mechanisch zu verspannen, dass Schwingungen der Spule unterbunden werden.. Erreicht wird dies durch eine Modulstützanordnung, die die Induktionsspulenanordnung umgibt und radial stützt, wobei die Modulstützanordnung aufrechte Elemente und Wellenelemente aufweist, um zu ermöglichen, dass jedes der mehreren Zwischenjoche separat entfernt werden kann, während die anderen an Ort und Stelle verbleiben.

Aus EP 1 818 638 A2 ist ein Verfahren zur Überwachung eines Induktionsofens bekannt geworden. Der Induktionsofen weist eine Induktionsspule auf, an deren Außenseite in Spulenumfangsrichtung voneinander beabstandet Joche anliegen. Die Joche sind gegen die Spule verspannt und zwischen diesen und der Spule befindet sich eine elektrische Isolation. M einen Fehler in der Isolation einfacher und schneller lokalisieren zu können, wird an jedem einzelnen Joch unabhängig von den anderen Jochen eine Veränderung eines elektrischen Isolationszustandes in Relation zu der Induktionsspule und/oder dem Erdpotenzial erfasst. Danach wird die Lokalissierung einer sich anbahnenden oder vorliegenden Schadstelle in der Spulenjochisolation vorgenommen.

Aus DE 10 2010 029 289 A1 ist ein Verfahren zum Betreiben eines Lichtbogenofens bekannt geworden. Bei dem Lichtbogenofen ist eine Schwingungsmesseinrichtung für eine Lichtbogenelektrode vorgesehen, mit deren Hilfe der Betrieb für den Lichtbogenofen hinsichtlich der mechanischen und/oder elektrischen Betriebsparameter gesteuert oder geregelt werden kann.

DE 20 2016 005 599 U1 beschreibt eine Metallentgasungsvorrichtung, bei der ein mit der Vakuumkammer verbundener Vibrationssensor bei der Entgasung der Metallschmelze auftretende Vibrationen erfasst und hierüber den Entgasungsprozess steuert.

Der vorliegenden Erfindung liegt die Aufgabe zugrunde, ein Verfahren zur Überprüfung des Funktionszustandes eines Induktionstiegelofens anzugeben, mit dem Spulendefekte frühzeitig erkannt werden können.

Diese Aufgabe wird erfindungsgemäß durch ein Verfahren zur Überprüfung des Funktionszustandes eines Induktionstiegelofens gelöst gemäß Anspruch 1.

Mit dem erfindungsgemäßen Diagnoseverfahren gelingt es, mögliche Spulendefekte frühzeitig zu erkennen, insbesondere eine möglicherweise unterbliebene Wartung durch Kontrolle der Spulenverspannung frühzeitig anzuzeigen, womit ein Spulenwechsel bzw. eine Spulenwartung besser vorgeplant und entstehende Ausfallkosten minimiert werden können. Die Erfindung geht dabei von der Tatsache aus, dass bei entsprechender Bewegungsfreiheit der Spulenwindungen unter dem Einfluss der elektromagnetischen Kräfte akustisch oder durch andere Sensorik wahrnehmbare Schwingungsbewegungen der Windungen entstehen. Das Schwingungsverhalten des Ofens bzw. der Spule im Betriebszustand wird dabei verwendet, um Rückschlüsse auf den Verschleißzustand zu ziehen.

Die durch Verschleiß oder fehlende Wartung bedingten Änderungen im Schwingungsverhalten können sich beispielsweise durch das Auftreten zusätzlicher charakteristischer Schwingungsfrequenzen, höherer Schwingungsamplituden bei bestimmten Frequenzen oder Schwebungen äußern, welche akustisch oder durch andere Schwingungsaufnehmer wahrnehmbar sind.

Im Einzelnen wird bei dem erfindungsgemäßen Verfahren ein Parameter bereitgestellt, der das Schwingungsverhalten des Induktionstiegelofens kennzeichnet, das einem optimalen Funktionszustand des Induktionstiegelofens entspricht. Dieser Parameter wird für das erfindungsgemäße Verfahren als SOLL-Wert verwendet.

In einem zweiten Schritt wird dieser das Schwingungsverhalten kennzeichnende Parameter im Betrieb des Induktionstiegelofens ermittelt bzw. gemessen und im Verfahren als IST-Wert verwendet. Mit anderen Worten, irgendein Parameter, der das Schwingungsverhalten des Ofens bzw. der Spule kennzeichnet, wird im optimalen Zustand des Ofens bereitgestellt und im jeweiligen Betriebszustand gemessen. Die verschiedenen Werte dieses Parameters werden danach miteinander verglichen, und aus der Höhe der Differenz beider Werte wird der Funktionszustand des Ofens abgeleitet. Dies kann beispielsweise durch einen Vergleich mit bekannten Kenngrößen erfolgen, welche den Funktionszustand des Ofens wiedergeben.

Die entsprechenden Kenngrößen können beispielsweise aus Tabellen ausgelesen werden, die bestimmte Funktionswerte des Ofens charakterisieren. Es versteht sich, dass dabei der Funktionszustand des Ofens um so schlechter ist, je größer die Differenz zwischen dem SOLL- und IST-Wert ist.

Bei dem erfindungsgemäßen Verfahren wird somit das Schwingungsverhalten des Tiegelofens und/oder der Tiegelofenspule ermittelt, um einen Spulenverschleiß, eine fehlende Wartung und andere Schäden an der Ofenkonstruktion zu ermitteln. Der einem optimalen Funktionszustand des Induktionstiegelofens entsprechende Parameter kann beispielsweise als bekannter Wert aus vorhandenen Tabellen, Kennfeldern etc., die für einen entsprechenden Ofentyp stehen, entnommen werden. Der einem optimalen Funktionszustand des Induktionstiegelofens entsprechende Parameter wird im Neuzustand des Induktionstiegelofens unter Nennbedingungen hinsichtlich Wartung und Betrieb ermittelt und für einen späteren Vergleich, der mit dem erfindungsgemäßen Verfahren durchgeführt wird, bereitgestellt werden. Das erfindungsgemäße Verfahren deckt in jedem Fall beide Wege ab.

In Weiterbildung des erfindungsgemäßen Verfahrens wird ein einem optimalen Funktionszustand des Induktionstiegelofens entsprechender Parametersatz bereitgestellt und wird dieser Parametersatz im Betrieb des Induktionstiegelofens gemessen. Es kann dabei irgendein Parametersatz Verwendung finden, der das Schwingungsverhalten des Induktionstiegelofens charakterisiert. Wenn hier von "Schwingungsverhalten des Induktionstiegelofens" gesprochen wird, so soll dies natürlich primär das Schwingungsverhalten der Induktionsspule betreffen.

Wenn die Parameterdifferenz bzw. die Differenz der gemessenen Parameterwerte einen bestimmten Wert überschreitet, wird vorzugsweise ein Alarmsignal oder eine andere Meldung abgegeben, die einen Defekt des Induktionstiegelofens bzw. der Induktionstiegelofenspule anzeigt.

Als SOLL-Wert kann neben einem einzelnen Parameter oder einem Parametersatz auch ein das Schwingungsverhalten kennzeichnender Bereich verwendet werden, der dann mit einem IST-Bereich verglichen wird.

Ein das Schwingungsverhalten des Induktionstiegelofens kennzeichnender Parameter kann ein beliebiger Parameter sein, der durch Messung im Betrieb eines Induktionstiegelofens erfasst werden kann. Beispielsweise und vorzugsweise kann es sich hierbei um einen akustischen Parameter, einen Bewegungsparameter, einen Druckparameter, einen elektrischen Parameter, einen magnetischen Parameter, einen elektromagnetischen Parameter etc. handeln. So wird beispielsweise bei einer bevorzugten Ausführungsform der Erfindung der das Schwingungsverhalten des Induktionstiegelofens kennzeichnende Parameter durch Schallpegelmessung ermittelt und mit einem entsprechenden SOLL-Schallpegelwert verglichen. Hier kann beispielsweise der Schalldruckpegel oder der Schallleistungspegel gemessen werden. Auch kann beispielsweise der das Schwingungsverhalten des Induktionstiegelofens kennzeichnende Parameter durch die Messung elektromagnetischer Wellen ermittelt und mit einem entsprechenden SOLL-Wert verglichen werden. Bewegungs- und/oder Druckmessungen sind ebenfalls geeignete Methoden, um das Schwingungsverhalten zu charakterisieren.

Es versteht sich, dass die Messungen mit geeigneten Sensoren durchgeführt werden, beispielsweise mit induktiven und/oder kapazitiven Sensoren und/oder Piezosensoren. Weitere geeignete berührungslose Messungen der Ofenschwingungsbewegung können mittels elektromagnetischer Wellen, beispielsweise Laser, erfolgen. Auch ist eine Messung der Ofenschwingungsbewegung durch Beschleunigungsaufnehmer, beispielsweise unter Ausnutzung des Piezoeffektes, geeignet.

Was die Auswertung der ermittelten Werte anbetrifft, so kann diese mittels Frequenzanalyse, beispielsweise hinsichtlich zusätzlicher, gegenüber dem Normalzustand auftretender Pegelmaxima bei anderen Frequenzen, durch Langzeitbeobachtung, kontinuierlich oder in regelmäßigen Abständen, durch Beobachtung und Vergleich in jeweils vergleichbaren Schmelzprozesszuständen, beispielsweise bei kompletter Füllung mit Schmelze und maximaler Ofenleistung, durch Trendbeobachtung des Maximalpegels über bestimmte oder alle Frequenzen etc. erfolgen. Weitere Messverfahren und Auswerteverfahren sind nicht ausgeschlossen.

Eine bevorzugte Ausführungsform des erfindungsgemäßen Verfahrens zeichnet sich dadurch aus, dass es bei einem Induktionstiegelofen mit Rinneninduktor durchgeführt wird.

Des Weiteren betrifft die vorliegende Erfindung einen Induktionstiegelofen, der dadurch gekennzeichnet ist, dass er zur Durchführung des vorstehend beschriebenen erfindungsgemäßen Verfahrens ausgebildet ist. Dieser Induktionstiegelofen ist dann, je nach Messung des das Schwingungsverhalten des Ofens kennzeichnenden Parameters, mit einer geeigneten Sensorik versehen, beispielsweise bei einem akustischen Messverfahren mit einem geeigneten Schallaufnehmer. Die vom jeweiligen Sensor gemessenen Signale werden in der Sensorik in geeignete elektrische Signale umgewandelt und einer geeigneten Steuereinrichtung zugeführt, die die Signale auswertet und mit bekannten Standardwerten vergleicht, welche als SOLL-Werte einen optimalen Funktionszustand des Induktionstiegelofens kennzeichnen.

Die Erfindung wird nachfolgend anhand von Ausführungsbeispielen in Verbindung mit der Zeichnung im Einzelnen erläutert. Es zeigen:
- Figur 1: einen senkrechten Schnitt durch einen Induktionstiegelofen stark schematisiert;
- Figur 2: den Induktionstiegelofen der Figur 1 mit schematisch angedeuteten akustischen Sensoren zur Ermittlung des Schwingungsverhaltens der Induktionstiegelspule des Induktionstiegelofens;
- Figur 3: den Ofen der Figur 1 mit Schwingungsaufnehmern an der Ofenkonstruktion und am magnetischen Rückschluss; und
- Figur 4: ein schematisches Ablaufdiagramm des Verfahrens zur Überprüfung des Funktionszustandes des Induktionstiegelofens.

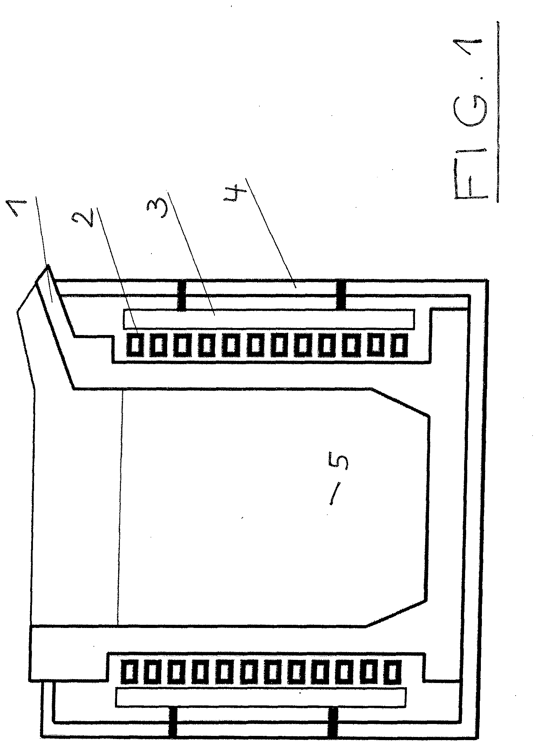

Figur 1 zeigt auf stark schematisierte Weise einen Induktionstiegelofen, der einen Tiegel 1 aufweist, der zur Aufnahme von Metallteilen bestimmt ist, welche im Ofen aufgeschmolzen werden. Die Metallteile (Schrott) und/oder die Schmelze sind mit 5 gekennzeichnet.

Den Tiegel 1 umgibt eine Induktionsspule 2, welche bei entsprechender elektrischer Erregung Wärmeenergie zum Aufschmelzen der im Tiegel 1 befindlichen Metallteile 5 erzeugt. Der Induktionsspule 2 ist ein magnetischer Rückschluss 3 zugeordnet. Das Ganze wird von einer Ofenkonstruktion 4 umgeben, die eine geeignete Tragstruktur für den Induktionstiegelofen bildet.

Eingangs wurde beschrieben, dass die Tiegelofenspule 2 im Betriebszustand dynamischen elektromagnetischen Kräften ausgesetzt ist, welche die Spulenwindungen periodisch in axialer Richtung zusammenziehen und in radialer Richtung ausdehnen. Zudem entstehend durch die Wärmedehnung des Tiegels 1 radiale, nach außen gerichtete Kräfte. Hierdurch werden im Laufe der Zeit isolierende Zwischenlagen zwischen den Spulenwindungen geschädigt, so dass sich die Materialstärke der Zwischenlagen reduziert, wodurch sich für die Spulenwindungen an diesen Stellen ein Bewegungsfreiraum ergibt. Bei entsprechender Bewegungsfreiheit der Spulenwindungen entstehen unter dem Einfluss der elektromagnetischen Kräfte akustisch oder durch andere Sensorik wahrnehmbare Schwingungsbewegungen der Windungen. Das erfindungsgemäße Verfahren benutzt nunmehr dieses Schwingungsverhalten des Ofens bzw. der Spule im Betriebszustand, um Rückschlüsse auf den Funktionszustand (Verschleißzustand) zu ziehen.

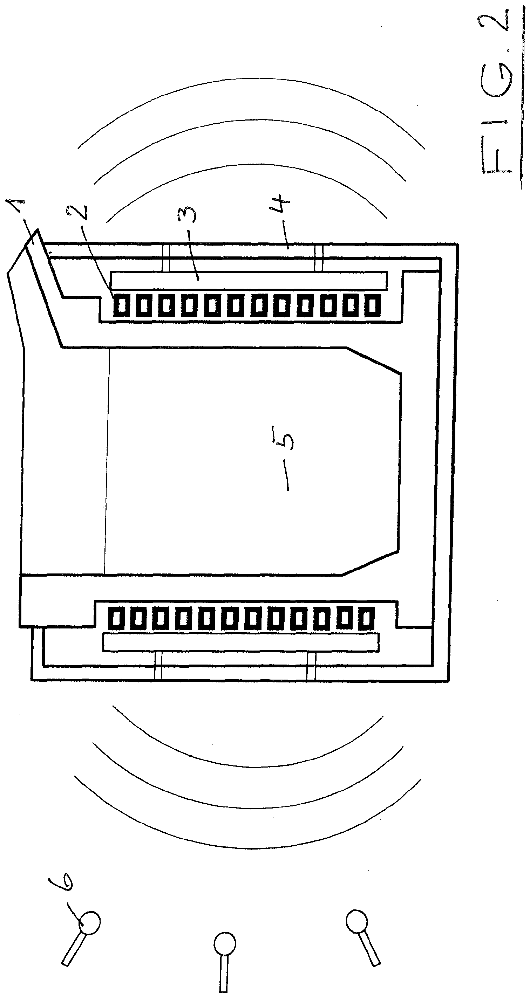

Figur 2 zeigt schematisch eine erste Ausführungsform des erfindungsgemäßen Verfahrens, bei dem das durch die Schwingungen der Spulenwindungen generierte akustische Verhalten des Ofens mithilfe von geeigneten Schallaufnehmern 6 erfasst wird. Bei diesen Schallaufnehmern 6 kann es sich um

Mikrofone handeln. Hiermit wird mindestens ein akustischer Parameter gemessen und in der Form von elektrischen Signalen einer Steuereinrichtung (nicht gezeigt) zugeführt, die den Signalwert mit einem Wert dieses Parameters vergleicht, welcher im Neuzustand des Ofens unter Nennbedingungen hinsichtlich Wartung und Betrieb gemessen wurde. Die erhaltene Differenz dieser Werte wird dazu benutzt, um den Funktionszustand des Ofens zu diagnostizieren. Je größer die Differenz ist, desto größer ist der Verschleiß der Spule. Wird eine bestimmte Schwelle des Differenzwertes überschritten, kann ein Alarmsignal oder eine andere Meldung abgegeben werden.

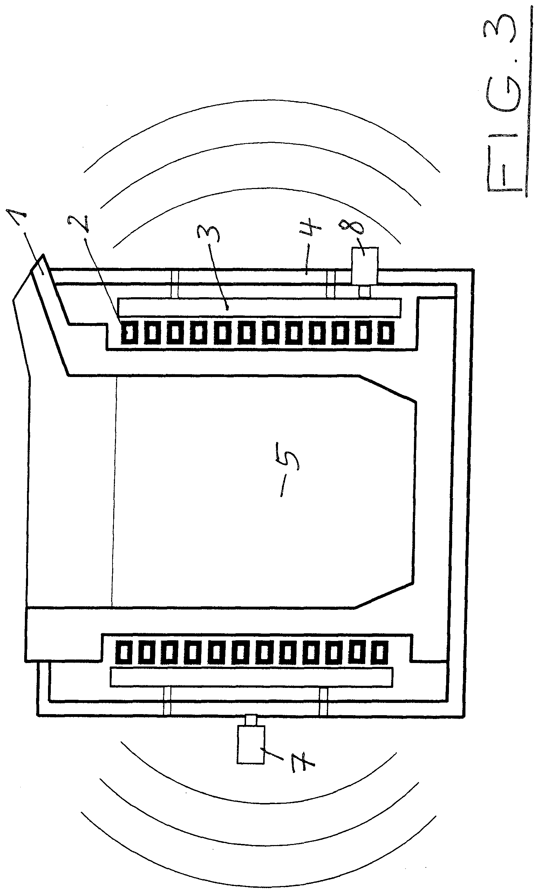

Figur 3 zeigt eine Ausführungsform des Verfahrens, bei dem ein Schwingungsaufnehmer 7 an der Ofenkonstruktion 4 und ein Schwingungsaufnehmer 8 am magnetischen Rückschluss 3 angeordnet sind. Auch hierbei werden die erfassten Signalwerte als elektrische Signale einer Steuereinrichtung zugeführt und mit vorher ermittelten Standardsignalen, die einen optimalen Zustand des Ofens wiedergeben, verglichen. Aus der Differenz der entsprechenden Werte wird auf den Funktionszustand des Ofens geschlossen.

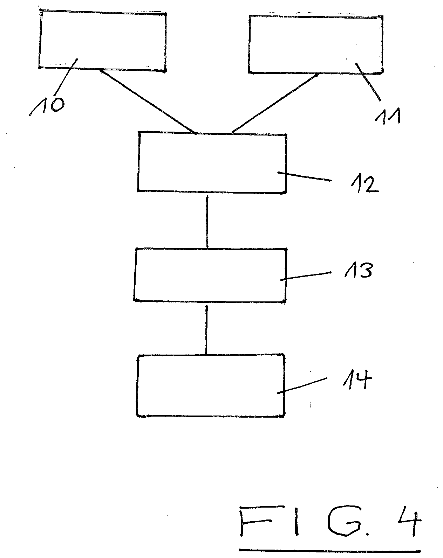

Figur 4 zeigt ein schematisches Ablaufdiagramm des erfindungsgemäßen Verfahrens. In Schritt 10 wird mindestens ein Parameter, der das Schwingungsverhalten des Ofens charakterisiert, im Neuzustand des Ofens unter Nennbedingungen hinsichtlich Wartung und Betrieb ermittelt. In Schritt 11 findet eine Messung dieses Parameters im Betriebszustand des Ofens statt. Beide Werte dieses Parameters werden in Schritt 12 miteinander verglichen, und es wird ein entsprechender Differenzwert errechnet. In Schritt 13 wird dann geprüft, ob der ermittelte Differenzwert einen Schwellenwert übersteigt, welcher einem Funktionszustand des Ofens ohne Defekte entspricht. Wird dieser Wert überschritten, wird in Schritt 14 ein Alarmsignal abgegeben, das auf einen Defekt des Ofens hindeutet.

## Patentansprüche

1. Verfahren zur Überprüfung des Funktionszustandes eines Induktionstiegelofens mit den folgenden Schritten:
Bereitstellen eines das Schwingungsverhalten des Induktionstiegelofens kennzeichnenden Parameters (SOLL-Wert), der im Neuzustand des Induktionstiegelofens unter Nennbedingungen hinsichtlich Wartung und Betrieb oder aus vorhandenen Tabellen oder Kennfeldern für einen entsprechenden Ofentyp ermittelt wird;
Messen dieses Parameters im Betrieb des Induktionstiegelofens (IST-Wert); und
Durchführen eines Vergleiches beider Parameterwerte und Ableiten des Funktionszustandes des Ofens aus der Höhe der Differenz beider Werte, um einen Verschleißzustand des Induktionstiegelofens zu ermitteln.

2. Verfahren nach Anspruch 1, **dadurch gekennzeichnet, dass** ein Parametersatz bereitgestellt und dieser Parametersatz im Betrieb des Induktionstiegelofens gemessen wird.

3. Verfahren nach Anspruch 1, **dadurch gekennzeichnet, dass** ein Alarmsignal oder eine andere Meldung abgegeben wird, wenn die Parameterdifferenz einen bestimmten Wert überschreitet.

4. Verfahren nach einem der vorangehenden Ansprüche, **dadurch gekennzeichnet, dass** als SOLL-Wert ein das Schwingungsverhalten kennzeichnender Bereich verwendet wird.

5. Verfahren nach einem der vorangehenden Ansprüche, **dadurch gekennzeichnet, dass** der das Schwingungsverhalten des Induktionstiegelofens kennzeichnende Parameter (IST-Wert) durch Schallpegelmessung ermittelt und mit einem entsprechenden SOLL-Schallpegelwert verglichen wird.

6. Verfahren nach einem der vorangehenden Ansprüche, **dadurch gekennzeichnet, dass** der das Schwingungsverhalten des Induktionstiegelofens kennzeichnende Parameter (IST-Wert) durch die Messung elektromagnetischer Wellen ermittelt und mit einem entsprechenden SOLL-Wert verglichen wird.

7. Verfahren nach einem der vorangehenden Ansprüche, **dadurch gekennzeichnet, dass** der das Schwingungsverhalten des Induktionstiegelofens kennzeichnende Parameter (IST-Wert) mit induktiven und/oder kapazitiven Sensoren und/oder Piezosensoren gemessen wird.

8. Verfahren nach einem der vorangehenden Ansprüche, **dadurch gekennzeichnet, dass** der das Schwingungsverhalten des Induktionstiegelofens kennzeichnende gemessene Parameter (IST-Wert) durch Auswertung mittels Frequenzanalyse ermittelt wird.

9. Verfahren nach einem der vorangehenden Ansprüche, **dadurch gekennzeichnet, dass** der das Schwingungsverhalten des Induktionstiegelofens kennzeichnende gemessene Parameter (IST-Wert) durch Langzeitbeobachtung kontinuierlich oder in regelmäßigen Abständen ermittelt wird.

10. Verfahren nach einem der vorangehenden Ansprüche, **dadurch gekennzeichnet, dass** der das Schwingungsverhalten des Induktionstiegelofens kennzeichnende gemessene Parameter (IST-Wert) durch Trendbeobachtung ermittelt wird.

11. Verfahren nach einem der vorangehenden Ansprüche, **dadurch gekennzeichnet, dass** es bei einem Induktionstiegelofen mit Rinneninduktor durchgeführt wird.

12. Induktionstiegelofen, **dadurch gekennzeichnet, dass** er zur Durchführung des Verfahrens nach einem der Ansprüche 1 bis 11 ausgebildet ist, wobei der Induktionstiegelofen eine Sensorik aufweist zur Messung des das Schwingungsverhalten des Ofens kennzeichnenden Parameters im Betrieb des Induktionstiegelofens (IST-Wert), wobei die von der Sensorik gemessenen Signale in elektrische Signale umgewandelt und einer Steuereinrichtung zugeführt werden, die die Signale auswertet und mit SOLL-Werten vergleicht, die einen optimalen Funktionszustand des Induktionstiegelofens kennzeichnen.

## Claims

1. Procedure for checking the functional status of an induction crucible furnace with the following steps:
Providing a parameter that characterizes the vibration behaviour of the coreless induction furnace (TARGET value), which is determined when the induction crucible furnace is new under nominal conditions with regard to maintenance and operation or from existing tables or characteristic diagrams for a corresponding furnace type;
Measurement of this parameter during operation of the induction crucible furnace (ACTUAL value); and
Carry out a comparison of both parameter values and deriving the functional state of the furnace from the difference between the two values in order to determine the state of wear of the coreless induction furnace.

2. Method according to claim 1, **characterized in that** a parameter set is provided and this parameter set is measured during operation of the coreless induction furnace.

3. Method according to claim 1, **characterized in that** an alarm signal or another message is emitted if the parameter difference exceeds a certain value.

4. Method according to any one of the preceding claims, **characterized in that** a range characterizing the vibration behaviour is used as the target value.

5. A method according to any one of the preceding claims, **characterized in that** the parameter (actual value) characterizing the vibration behaviour of the induction crucible furnace is determined by sound level measurement and compared with a corresponding target sound level value.

6. Method according to one of the preceding claims, **characterized in that** the parameter (actual value) characterizing the vibration behaviour of the coreless induction furnace is determined by measuring electromagnetic waves is determined and compared with a corresponding target value.

7. Method according to one of the preceding claims, **characterized in that** the vibrating element behaviour of the coreless induction furnace (ACTUAL value) is measured with inductive and/or capacitive sensors and/or piezo sensors.

8. Method according to one of the preceding claims, **characterized in that** the vibrating element behaviour of the coreless induction furnace (actual value) is determined by evaluation using frequency analysis.

9. Method according to one of the preceding claims, **characterized in that** the measured parameter (actual value) characterizing the vibration behaviour of the coreless induction furnace is determined continuously or at regular intervals by long-term monitoring.

10. Method according to one of the preceding claims, **characterized in that** the measured parameter (actual value) characterizing the vibration behaviour of the induction crucible furnace is determined by trend observation.

11. Process according to one of the preceding claims, **characterized in that** it carried out in a induction crucible furnace with channel inductor.

12. A induction crucible furnace, **characterized in that** it is suitable to carry out the method according to any one of claims 1 to 11 is formed, whereby the in the induction crucible furnace has a sensor system for measuring the parameter characterizing the vibration behaviour of the furnace during operation of the induction crucible furnace (actual value), wherein the signals measured by the sensor system are converted into electrical signals and fed to a control device that evaluates the signals and compares them with target values which characterize an optimal functional state of the induction crucible furnace.

## Revendications

1. Procédé de vérification de l'état fonctionnel d'un four à creuset à induction, comprenant les étapes suivantes :
mise à disposition d'un paramètre (valeur de consigne) caractérisant le comportement vibratoire du four à creuset à induction, lequel est déterminé à l'état neuf du four à creuset à induction dans des conditions nominales relatives à l'entretien et à l'utilisation ou à partir de tableaux ou de champs caractéristiques existants pour un type de four correspondant ;
mesure de ce paramètre pendant l'utilisation du four à creuset à induction (valeur réelle) ; et
exécution d'une comparaison des deux valeurs de paramètre et déduction de l'état fonctionnel du four à partir de la hauteur de la différence entre les deux valeurs, afin de déterminer un état d'usure du four à creuset à induction.

2. Procédé selon la revendication 1, **caractérisé en ce qu'**un ensemble de paramètres est fourni et cet ensemble de paramètres est mesuré pendant l'utilisation du four à creuset à induction.

3. Procédé selon la revendication 1, **caractérisé en ce qu'**un signal d'alarme ou une autre notification est émis lorsque la différence de paramètre dépasse une certaine valeur.

4. Procédé selon l'une des revendications précédentes, **caractérisé en ce qu'**une plage caractérisant le comportement vibratoire est employée comme valeur de consigne.

5. Procédé selon l'une des revendications précédentes, **caractérisé en ce que** le paramètre (valeur réelle) caractérisant le comportement vibratoire du four à creuset à induction est déterminé par mesure de niveau sonore et comparé avec une valeur de niveau sonore de consigne correspondante.

6. Procédé selon l'une des revendications précédentes, **caractérisé en ce que** le paramètre (valeur réelle) caractérisant le comportement vibratoire du four à creuset à induction est déterminé par mesure d'ondes électromagnétiques et comparé avec une valeur de consigne correspondante.

7. Procédé selon l'une des revendications précédentes, **caractérisé en ce que** le paramètre (valeur réelle) caractérisant le comportement vibratoire du four à creuset à induction est mesuré à l'aide de capteurs inductifs et/ou capacitifs et/ou de capteurs piézoélectriques.

8. Procédé selon l'une des revendications précédentes, **caractérisé en ce que** le paramètre mesuré (valeur réelle) caractérisant le comportement vibratoire du four à creuset à induction est déterminé par évaluation au moyen d'une analyse de fréquence.

9. Procédé selon l'une des revendications précédentes, **caractérisé en ce que** le paramètre mesuré (valeur réelle) caractérisant le comportement vibratoire du four à creuset à induction est déterminé en continu ou à intervalles réguliers par observation à long terme.

10. Procédé selon l'une des revendications précédentes, **caractérisé en ce que** le paramètre mesuré (valeur réelle) caractérisant le comportement vibratoire du four à creuset à induction est déterminé par observation de tendances.

11. Procédé selon l'une des revendications précédentes, **caractérisé en ce que** celui-ci est mis en œuvre pour un four à creuset à induction avec inducteur à canal.

12. Four à creuset à induction, **caractérisé en ce que** celui-ci est conçu pour la mise en œuvre du procédé selon l'une des revendications 1 à 11, dans lequel le four à creuset à induction présente un système de capteurs destiné à mesurer le paramètre caractérisant le comportement vibratoire du four pendant l'utilisation du four à creuset à induction (valeur réelle), dans lequel les signaux mesurés par le système de capteurs sont convertis en signaux électriques et fournis à un dispositif de commande, lequel évalue les signaux et les compare avec des valeurs de consigne caractérisant un état fonctionnel optimal du four à creuset à induction.
